# EUROPÄISCHE PATENTSCHRIFT

(11) **EP 3 261 824 B1**
(45) Veröffentlichungstag und Bekanntmachung des Hinweises auf die Patenterteilung: **01.07.2020**
(21) Anmeldenummer: 15801460.5
(22) Anmeldetag: 30.11.2015
(51) Int. Cl.: B29C 70/52, B29C 63/02, B29D 99/00

(54) **PULTRUSIONSVERFAHREN ZUR HERSTELLUNG VON FASERVERSTÄRKTEN KUNSTSTOFFPROFILEN**
PULTRUSION METHOD FOR PRODUCING FIBRE-REINFORCED PLASTIC PROFILED SECTIONS
PROCÉDÉ D'EXTRUSION PAR ÉTIRAGE DE PROFILÉS EN PLASTIQUE RENFORCÉS PAR FIBRES

(30) Priorität: 24.02.2015 DE 102015203313
(43) Veröffentlichungstag der Anmeldung: 03.01.2018
(73) Patentinhaber: Bayerische Motoren Werke Aktiengesellschaft, 80809 München (DE)
(72) Erfinder: EISCH, Christoph, 80939 München (DE)
(86) Internationale Anmeldenummer: PCT/EP2015/078034
(87) Internationale Veröffentlichungsnummer: WO 2016/134793

(56) Entgegenhaltungen:
- EP-A2- 1 347 114
- US-A- 3 895 896
- US-A- 4 462 946
- US-A1- 2007 204 948

## Beschreibung

Die Erfindung betrifft ein Pultrusionsverfahren zum Herstellen eines faserverstärkten Kunststoffprofils, sowie eine Pultrusionsvorrichtung zur Herstellung desselben.

Für die Herstellung von faserverstärkten Kunststoffprofilen ist beispielsweise aus der DE 10 2009 053 947 A1 ein Strangziehverfahren (auch als Pultrusionsverfahren bezeichnet) bekannt. In einem ersten Schritt werden auf Spulen vorgehaltene Verstärkungsfasern, beispielsweise aus Glas- oder Kohlenstofffasern, von den Spulen abgezogen und in einem Imprägnier-Werkzeug mit einer Matrix, beispielsweise einem Harz, imprägniert. In einem Vorformwerkzeug werden die imprägnierten Fasern vorausgerichtet, um diese in einem nachfolgenden Schritt mittels eines Strangziehwerkzeugs in die endgültige Profilform zu bringen und auszuhärten. Ein so hergestelltes Profil wird mithilfe einer Zugeinrichtung kontinuierlich durch die einzelnen Bearbeitungsstationen gezogen und anschließend einem Schneidwerkzeug zum Abtrennen von Segmenten definierter Länge zugeführt.

Allgemein sind weitere Ausgestaltungen von Strangziehverfahren bekannt, die unter anderem das zusätzliche Einbringen von flächigen Halbzeugen, wie beispielsweise von multidirektionalen Gelegen, umfassen, welche auf den vorausgerichteten Verstärkungsfasern zur Erzeugung eines Lagenaufbaus aufgebracht und in die gewünschte, endgültige Profilform drapiert werden können. Es kann hierbei der erzeugte Lagenaufbau aus Verstärkungsfasern und aufgebrachten Gelegen beispielsweise zu einem Hohlprofil mit geschlossenem Profilquerschnitt umgeformt werden, indem zumindest die einander entgegengesetzten seitlichen Ränder eines oder mehrerer Gelege miteinander verbunden werden. Hierzu werden die seitlichen Ränder miteinander überlappend angeordnet, um das Hohlprofil mit einem Hohlraum im Inneren des Profilquerschnitts zu definieren.

Hierbei ist der erzeugte Überlappungsbereich ausreichend groß zu wählen, dass ein flächiges Aufliegen der sich überlappenden Abschnitte ein Verrutschen der Fasern beziehungsweise des Geleges verhindert. Jedoch wird auf diese Weise eine Materialdopplung verursacht, die sowohl einen Materialbedarf erhöht, als auch entsprechende zusätzliche Materialkosten und ein hohes Gewicht des erzeugten Profils bedingt. Ist im Gegensatz dazu der Überlappungsbereich zu klein gewählt oder treten Unregelmäßigkeiten im Strangziehprozess auf, so kann es zu einem Aufscheren des Geleges kommen, wodurch das gesamte erzeugte Profil unbrauchbar wird.

Des Weiteren ist aus der EP 1 347 114 A2 ein Pultrusionsverfahren und eine Pultrusionsvorrichtung bekannt. Aufgabe der Erfindung ist es daher eine Prozesssicherheit für ein Pultrusionsverfahren zu verbessern und gleichzeitig einen Materialbedarf des eingesetzten Fasermaterials zu reduzieren.

Diese Aufgabe wird gelöst mittels eines Verfahrens gemäß Patentanspruch 1 sowie einer Pultrusionsvorrichtung mit den Merkmalen gemäß Patentanspruch 10. Vorteilhafte Ausführungsformen ergeben sich aus den jeweils abhängigen Patentansprüchen.

Demnach wird ein Pultrusionsverfahren nach Anspruch 1 zum Herstellen eines faserverstärkten Kunststoffprofils mit mindestens den folgenden Schritten vorgeschlagen:
- Anordnen einer Anzahl von Faserrovings zu einem unidirektionalen Faservorprofil mit einem definierten ersten Querschnitt,
- Aufbringen mindestens eines Geleges auf das zuvor erzeugte unidirektionale Faservorprofil zum Erzeugen eines Lagenaufbaus, vorzugsweise eines multidirektionalen Lagenaufbaus, wobei jedes Gelege seitliche Randabschnitte umfasst,
- überlappendes Anordnen zweier seitlicher Randabschnitte zum Erzeugen eines gemeinsamen Überlappungsabschnitts,
wobei das Verfahren außerdem einen Schritt des lokalen Verpressens des Überlappungsabschnitts zum Fixieren der beiden sich überlappenden seitlichen Randabschnitte in dem Überlappungsabschnitt umfasst.

Zunächst werden also mehrere Faserrovings zu dem unidirektionalen Faservorprofil angeordnet. Beispielsweise können hierzu auf Spulen vorgehaltene Faserrovings von den Spulen abgezogen und mittels eines Vorformwerkzeugs zu dem unidirektionalen Faservorprofil zusammengeführt werden, welches den definierten ersten Querschnitt erhält. Dieser Erste Querschnitt des Faservorprofils kann entweder bereits einem späteren Querschnitt des zu erzeugenden Kunststoffprofils entsprechen oder lediglich eine Vorfom darstellt, die im Laufe der nachfolgenden Verfahrensschritte in den späteren finalen Querschnitt des zu erzeugenden Kunststoffprofils überführt wird.

Als unidirektionales Faservorprofil ist eine parallele Anordnung der einzelnen Faserrovings zu verstehen, wobei ein jeweiliger Abstand der Faserrovings untereinander eventuellen Anforderungen angepasst werden kann. Die Faserrovings können entweder unmittelbar aneinandergrenzend, also ohne Abstand zu den jeweils benachbarten Faserrovings, oder beabstandet zueinander angeordnet sein. Eine Faserorientierung des Faservorprofils beziehungsweise der das Faservorprofil bildenden Faserrovings ist entsprechend in Zugrichtung der Pultrusionsrichtung ausgerichtet, im Folgenden auch als 0°-Richtung bezeichnet. Innerhalb einer gemeinsamen, senkrecht zur Pultrusionsrichtung angeordneten Ebene (die Pultrusionsrichtung steht also senkrecht zu dieser Ebene) bildet die Anordnung der zueinander benachbarten Faserrovings den definierten ersten Querschnitt des Faservorprofils. Als Faservorprofil ist daher statt eines festen Körpers vielmehr die beschriebene Anordnung beziehungsweise lose Führung der einzelnen Faserrovings zu verstehen, die zu diesem Zeitpunkt noch nicht zwingend miteinander verbunden oder gegeneinander fixiert sein müssen.

Anschließend werden ein oder mehrere Gelege zugeführt und auf dem zuvor erzeugten Faservorprofil angeordnet, so dass ein mehrschichtiger Lagenaufbau entsteht. Vorzugsweise stellen das oder die Gelege jeweils selbst einen mehrlagigen Aufbau dar, wobei die einzelnen Lagen eine voneinander abweichende Faserorientierung aufweisen können. Optional kann das Gelege mit einer von der Pultrusionsrichtung abweichenden Winkelausrichtung auf das Faservorprofil zur Erzeugung eines multidirektionalen Lagenaufbaus aufgebracht werden, wodurch sich eine Stabilität und Steifigkeit des späteren Kunststoffprofils vorteilhaft beeinflussen lässt.

Während des Aufbringens des mindestens einen Geleges, und/oder in einem nachfolgenden Schritt, werden zwei seitliche Randabschnitte des einen oder der mehreren Gelege überlappend angeordnet, um den gemeinsamen Überlappungsabschnitt zu bilden.

In einem weiteren Schritt des Verfahrens erfolgt das beschriebene lokale Verpressen des Überlappungsabschnitts, um die einander überlappenden Randabschnitte derart miteinander zu verbinden, dass eine verstärkte verschiebungssichere Fixierung der Randabschnitte erzeugt wird. Hierzu wird der Überlappungsabschnitt zumindest lokal in einem oder mehreren Bereichen mit einer Druckkraft beaufschlagt und zusammengedrückt.

Für den Fall, dass das bzw. die Gelege zu diesem Zeitpunkt noch in einem nicht imprägnierten, trockenen Zustand vorliegen, also noch nicht mit einer Matrix imprägniert sind, wird ein Kontakt der beiden einander überlappenden Randabschnitte bereits durch das lokale Verpressen gegenüber der bisherigen Überlappung deutlich erhöht. Bildlich dargestellt werden die beiden Randabschnitte durch das lokale Verpressen gemeinsam komprimiert und gleichzeitig eine Verzahnung in dem verpressten Bereich der beiden Randabschnitte verstärkt, so dass die Verbindung höheren Reib- beziehungsweise Scherkräften standhalten kann als dies ohne das Verpressen der Fall wäre, so dass ein Lösen oder Aufscheren der Randabschnitte verhindert oder zumindest erschwert wird.

Im Falle einer bereits erfolgten Imprägnierung mit einer Matrix, welche nachfolgend noch im Detail dargestellt wird, wird eine zusätzliche Verdichtung und bessere Verteilung der Matrix geschaffen, so dass eine ebenfalls verstärkte Verbindung in dem verpressten Bereich geschaffen wird, um ein Aufscheren der Randabschnitte zu verbessern.

In jedem Fall kann auf diese Weise verhindert werden, dass aufgrund einer Zugkraft bei der Durchführung des Pultrusionsverfahrens auch bei einer kleinen Dimensionierung des Überlappungsabschnitts eine Verschiebung der beiden Randabschnitte zueinander erfolgt. Die Gefahr einer hierdurch bewirkten Schwächung des erzeugten Kunststoffprofils kann somit wirkungsvoll verhindert werden, und die Randabschnitte möglichst kurz gehalten werden, wodurch sich eine unnötige Materialdopplung, sowie entsprechend höhere Materialkosten und ein zusätzliches Gewicht vermeiden lässt. Als seitliche Randabschnitte sind die Randbereiche der Gelege zu verstehen, die bezogen auf die Pultrusionsrichtung den seitlichen Abschluss des jeweiligen Geleges bilden.

Wie bereits angedeutet, kann das Verfahren außerdem mindestens einen Schritt des Imprägnierens der Faserrovings, des Faservorprofils, des mindestens einen Geleges und/oder des Lagenaufbaus mit einer Matrix umfassen. Das lokale Verpressen bewirkt in jedem dieser Fälle eine verbesserte Verbindung der Randabschnitte miteinander sowie eine verbesserte Verteilung der Matrix, wodurch eine besonders haltbare Fixierung erzielt werden kann.

Beispielsweise kann der Schritt des lokalen Verpressens während des Schrittes des Imprägnierens des Lagenaufbaus und/oder nach dem Schritt des Imprägnierens des Lagenaufbaus erfolgen. Wird also der Lagenaufbau imprägniert und erfolgt während oder anschließend das lokale Verpressen, so wird in besonders vorteilhafter Weise eine besonders belastbare Verbindung der beiden Randabschnitte in dem Überlappungsbereich geschaffen, indem sowohl die Randabschnitte des Geleges als auch die das Gelege imprägnierende Matrix gemeinsam verpresst und zu einer gemeinsamen Einheit komprimiert werden.

Alternativ oder zusätzlich kann der (oder ein zusätzlicher) Schritt des lokalen Verpressens vor und/oder während eines Schrittes des Aushärtens des imprägnierten Lagenaufbaus erfolgen. Die Randabschnitte und die Matrix werden also gemeinsam lokal fest miteinander verpresst und die Matrix gleichzeitig oder anschließend ausgehärtet, so dass die verpresste Verbindung der Randabschnitte im Wesentlichen erhalten bleibt und eine besonders belastbare Verbindung bereitgestellt werden kann.

Bei der Herstellung des Faservorprofils sind verschiedene Querschnitte möglich.

Zum Beispiel umfasst der definierte erste Querschnitt des unidirektionalen Faservorprofils einen rechteckigen ersten Querschnitt zur Definition eines als ebene Faserlage ausgebildeten Faservorprofils, oder einen in Umfangsrichtung geschlossenen oder geöffneten ersten Querschnitt zur Definition eines als offenes oder geschlossenes Hohlprofil ausgebildeten Faservorprofils.

Die unidirektional parallel zueinander angeordneten Faserrovings können also ein- oder mehrschichtig zu einer ebenen Faserlage angeordnet werden, die einen rechteckigen Querschnitt aufweist. Die Faserrovings können aber auch zu einem Faservorprofil angeordnet werden, welches ein Hohlprofil darstellt und einen inneren Hohlraum umschließt. Der Querschnitt des Hohlprofils kann in seiner Umfangsrichtung geschlossen oder geöffnet ausgeführt sein. Derartige Querschnitte lassen sich zum Beispiel mittels eines Kernprofils erzeugen oder durch Drapieren, wie nachfolgend noch näher ausgeführt wird.

Gemäß einer Ausführungsform kann das Verfahren ein zueinander benachbartes Aufbringen von zwei Gelegen auf einer Oberfläche des Faservorprofils umfassen, wobei die Gelege mit einem dem jeweils benachbarten Gelege zugewandten Randabschnitt überlappend zueinander angeordnet werden, zum Erzeugen des Lagenaufbaus und des Überlappungsabschnitts.

Mit anderen Worten dargestellt: Auf einer Oberfläche des von den Faserrovings gebildeten Faservorprofils werden zwei Gelege (bezogen auf die Pultrusionsrichtung) beispielsweise seitlich nebeneinander aufgebracht. Diese weisen jeweils einen (ebenfalls bezogen auf die Pultrusionsrichtung) seitlichen Randabschnitt auf. Beide seitlichen Randabschnitte werden derart überlappend miteinander angeordnet, dass diese den gemeinsamen Überlappungsabschnitt bilden, um in diesem durch das lokale Verpressen besonders belastbar miteinander verbunden zu werden. Die beiden Gelege können entweder auf einer äußeren Oberfläche des Faservorprofils und/oder auf einer inneren Oberfläche (sofern vorhanden) aufgebracht werden.

Alternativ kann das Verfahren ein Aufbringen von mindestens zwei Gelegen umfassen, welche auf einander entgegengesetzten Oberflächen des Faservorprofils zum Erzeugen der Lagenanordnung aufgebracht werden. Im Gegensatz zu einem lediglich einseitigen und damit asymmetrischen Aufbringen eines oder mehrerer Gelege, wird mittels des beidseitigen Aufbringens von Gelegen ein symmetrischer Lagenaufbau erzeugt, der eine vorteilhafte Stützwirkung für das Faservorprofil bereitstellt.

Unabhängig vom Aufbau des gewählten Lagenaufbaus kann das Verfahren einen Schritt des Drapierens des Faservorprofils und/oder des Lagenaufbaus vor oder während dem Schritt des Erzeugens des Überlappungsabschnitts umfassen. Soll also im Rahmen des Pultrusionsverfahrens zum Beispiel aus dem Lagenaufbau mit ebenem oder offenem ersten Querschnitt ein Hohlprofil mit einem geschlossenen zweiten Querschnitt hergestellt werden, so wird durch das Drapieren eine Umformung in den gewünschten Profilquerschnitt erzeugt. Gleiches gilt für eine Umformung in einen ebenfalls offenen Querschnitt.

Je nach Ausgestaltung des Drapierschrittes, kann während des gesamten Pultrusionsprozesses zunächst ein Vordrapieren des Faservorprofils (mit dem definierten ersten Querschnitt) oder des Lagenaufbaus erfolgen und ein vorläufiger zweiter Profilquerschnitt erzeugt werden, wobei die seitlichen Randabschnitte des oder der Gelege(s) erst nachfolgend im Rahmen einer Endkonturformung tatsächlich miteinander überlappend in Kontakt gebracht und/oder verpresst werden. Alternativ können die seitlichen Randabschnitte des oder der Gelege(s) aber auch bereits während des Drapierschrittes miteinander in Kontakt gebracht werden. Auf diese Weise lassen sich in einer Umfangsrichtung beliebige offene oder geschlossene Querschnitte erzeugen, zum Beispiel regelmäßige, unregelmäßige, symmetrische oder asymmetrische, insbesondere runde, ovale oder mehreckige Querschnitte, oder Mischungen hieraus.

Wie bereits beschrieben, kann das Verfahren außerdem mindestens einen Schritt des Imprägnierens der Faserrovings, des Faservorprofils, des mindestens einen Geleges und/oder des Lagenaufbaus mit einer Matrix umfassen.

Vorzugsweise erfolgt der Schritt des Imprägnierens nach dem Schritt des Drapierens, falls dieser vorgesehen ist. Dies bedeutet, dass der Lagenaufbau, also Faserrovings und Gelege, zunächst im trockenen, nichtimprägnierten Zustand verarbeitet und gegebenenfalls drapiert werden. Erst nachdem die beiden Randabschnitte miteinander überlappend angeordnet wurden, erfolgt in diesem Fall der Schritt des Imprägnierens. Ist der Schritt des Drapierens des Lagenaufbaus nicht vorgesehen, so kann der Lagenaufbau ohne Drapieren den Schritt des Imprägnierens durchlaufen.

Alternativ oder zusätzlich können bereits die Faserrovings als Einzelrovings oder in Form des Faservorprofils einem (zusätzlichen) Imprägnierungsschritt unterzogen werden. Ebenso ist es möglich, alternativ oder zusätzlich, das Gelege separat oder zusammen mit dem Faservorprofil (entspricht dem Lagenaufbau) mit der Matrix zu imprägnieren. In diesen Fällen werden die nachfolgenden Bearbeitungsschritte im nassen, imprägnierten Zustand durchgeführt.

Beispielsweise kann der Schritt des Imprägnierens mit einer Matrix ein Eintauchen in ein Matrix-Tauchbad oder ein Injizieren einer Matrix umfassen. Vorzugsweise umfasst das mindestens eine Gelege jeweils eine Anzahl von Schichten mit zueinander unterschiedlicher Winkelausrichtung. Es lassen sich somit die Festigkeit und Steifigkeit des späteren Profilbauteils erheblich verbessern.

Des Weiteren kann das beschriebene Pultrusionsverfahren einen Schritt des Schneidens mit einem Schneidwerkzeug umfassen. Dieser schließt sich den beschriebenen Schritten an und erfolgt nachgelagert zu dem Schritt des Härtens.

Des Weiteren wird eine Pultrusionsvorrichtung nach Anspruch 10 zum Herstellen eines faserverstärkten Kunststoffprofils bereitgestellt, wobei die Vorrichtung zum Ausführen des beschriebenen Verfahrens ausgebildet ist. Die Pultrusionsvorrichtung umfasst Mittel zum lokalen Verpressen des Überlappungsabschnitts zum Fixieren der beiden sich überlappenden seitlichen Randabschnitte in dem Überlappungsabschnitt.

Die Mittel zum lokalen Verpressen umfassen mindestens eine lokale Ausbuchtung zur Querschnittsverengung in einer Imprägniervorrichtung und/oder in einer Aushärtevorrichtung.

Dies kann derart ausgestaltet sein, dass ein Förderkanal der Pultrusionsvorrichtung, durch den ein Transport des Lagenaufbaus oder (zu einem späteren Bearbeitungszeitpunkt) des zu erzeugenden Kunststoffprofils erfolgt, einen Förderkanalquerschnitt aufweist, der lokale Ausbuchtungen aufweist, welche diesen Förderkanalquerschnitt derart verengen, dass beim Durchlaufen des Förderkanalquerschnitts die eine oder die mehreren lokale(n) Ausbuchtung(en) eine Druckkraft auf den Überlappungsabschnitt ausüben, die das lokale Verpressen bewirken. Beispielsweise kann dieser verengte Förderkanalquerschnitt in der Imprägniervorrichtung oder der Aushärtevorrichtung vorgesehen werden, so dass der verpresste Zustand des Überlappungsbereichs möglichst gut erhalten bleibt, bis die Matrix ausgehärtet wird, um eine eventuelle ungewollte rückstellende Entspannung des verpressten Bereichs zu vermeiden.

Das beschriebe Verfahren und die beschriebene Pultrusionsvorrichtung ermöglichen somit die Herstellung von faserverstärkten Kunststoffprofilen mittels Pultrusion, die insbesondere als Hohlprofile ausgeführt sein können, indem ein Bereich vorgesehen wird, in welchem sich das eine oder die mehreren Gelege überlappen und dort miteinander lokal verpresst werden. Die Überlappung kann auf diese Weise minimal ausgeführt werden, indem sie gerade ausreichend für die Erzeugung der Verpressung ist. Auf große Überlappungen und entsprechend unnötigen Materialeinsatz kann somit verzichtet werden. Auch lassen sich entsprechend hohe Kosten und ein hohes Gewicht sowie die Entstehung von Ausschussbauteilen aufgrund aufgescherter Überlappungen vermeiden.

Die Erfindung wird nachfolgend anhand von Ausführungsbeispielen unter Bezugnahme auf die Figuren näher erläutert. Es zeigen:
- Fig. 1: eine Pultrusionsvorrichtung gemäß der Beschreibung, und
- Fig. 2: einen Hohlprofilquerschnitt eines faserverstärkten Kunststoffprofils in einem Förderkanal der Pultrusionsvorrichtung, und
- Fig. 3: einen Profilquerschnitt eines Lagenaufbaus in einem Förderkanal der Pultrusionsvorrichtung.

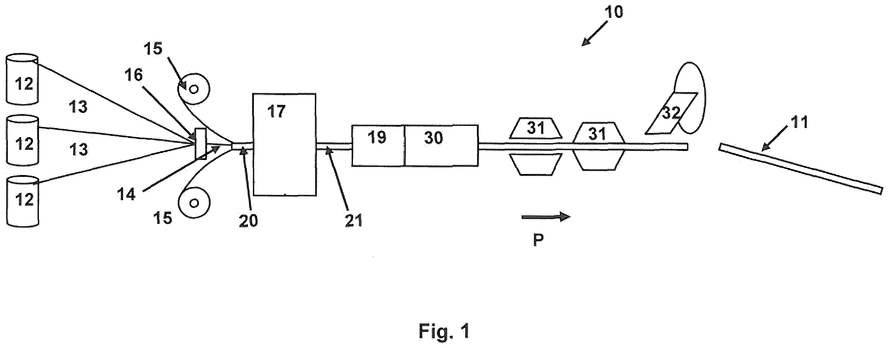

Fig. 1 zeigt eine Pultrusionsvorrichtung 10 zum Herstellen eines faserverstärkten Kunststoffprofils 11. Die Pultrusionsvorrichtung 10 umfasst eine Anzahl von Spulen 12 mit Faserrovings 13, die von den Spulen 12 in Pultrusionsrichtung P abgezogen und beispielsweise mittels einer Vorformvorrichtung 16 zu dem unidirektionalen Faservorprofil 14 zusammengeführt werden. Auf das bereitgestellte unidirektionale Faservorprofil 14 aus der Anzahl von Faserrovings erfolgt ein Aufbringen von Gelegen 15 zum Erzeugen eines Lagenaufbaus 20. Hierzu können die Gelege 15 beispielsweise ebenfalls als Spulen bereitgestellt werden.

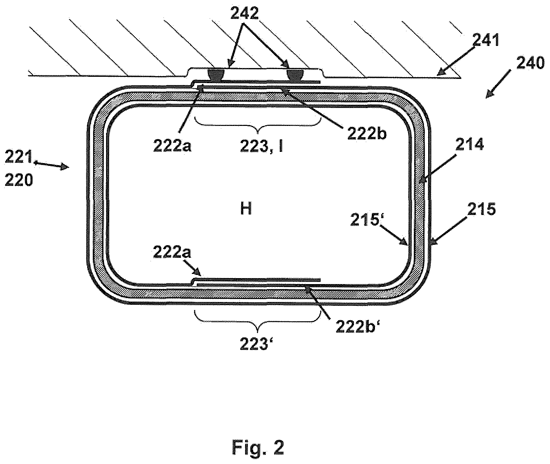

In der dargestellten Ausführungsform erfolgt ein Aufbringen der Gelege 15 auf einander entgegengesetzten Seiten des in der Vorformvorrichtung 16 erzeugten Faservorprofils 14, also beispielsweise einer äußeren und einer inneren Oberfläche und/oder einer Ober- und einer Unterseite des Faservorprofils 14, wodurch der Lagenaufbau 20 erzeugt wird. Der Lagenaufbau 20 wird optional einer Drapiervorrichtung 17 zugeführt, in der durch ein kontinuierliches Drapieren eines ersten Querschnitts des Lagenaufbaus 20 ein kontinuierliches Hohlprofil 21 (also ein umgeformter Lagenaufbau 20) mit einem zweiten Querschnitt, beispielsweise einem dreidimensionalen Hohlprofilquerschnitt, erzeugt wird. Während des Drapierens erfolgt ein Umformen des Lagenaufbaus 20, bei dem jeweils zwei seitliche Randabschnitte eines oder zweier Gelege(s) 15 überlappend angeordnet werden, um jeweils einen gemeinsamen Überlappungsabschnitt zu bilden. Ein beispielhafter Querschnitt für einen als Hohlprofil 21 umgeformten Lagenaufbau 20 ist in Fig. 2 dargestellt.

Bis zu diesem Zeitpunkt ist das drapierte Hohlprofil 21 in dieser Ausführungsform noch in trockenem, also nicht-imprägniertem Zustand. Erst anschließend wird das kontinuierliche Hohlprofil 21 einer nachfolgenden Imprägniervorrichtung 19 zugeführt, in welcher eine Matrix in den zum Hohlprofil 21 drapierten Lagenaufbau 20 injiziert wird. In einer darauffolgenden Aushärtevorrichtung 30 wird die injizierte Matrix (aus-) gehärtet.

Die Pultrusionsvorrichtung 10 verfügt des Weiteren über eine Abziehvorrichtung 31 zum Bereitstellen der Zugkraft für die Pultrusion des Kunststoffprofils und eine Schneidvorrichtung 32 zum Abtrennen von Kunststoffprofilen 11 mit einer definierten Länge. Abziehvorrichtungen 31 und Schneidvorrichtungen 32 sind allgemein bekannt, so dass auf deren Aufbau und Funktionsweise nicht eingegangen wird.

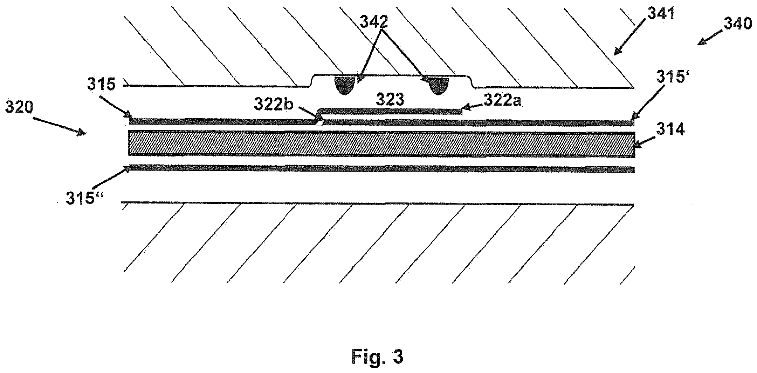

In den folgenden Fig. 2 und 3 sind identische oder entsprechende Komponenten mit entsprechenden Bezugszeichen benannt (letzte beiden Ziffern), welchen die jeweilige Figurennummer (erste Ziffer) vorangestellt ist.

In Fig. 2 ist ein beispielhafter Förderkanal 240 für die Pultrusionsvorrichtung 10 dargestellt, durch den ein Transport eines als Hohlprofil 221 umgeformten Lagenaufbau 220 erfolgt. Die Pultrusionsrichtung P erstreckt sich senkrecht zur Bildebene.

Dieser Förderkanal 240 kann beispielsweise in der Imprägniervorrichtung 19 oder der Aushärtevorrichtung 30 vorgesehen oder Teil der jeweiligen Vorrichtung sein. Der Querschnitt des Förderkanals 240 weist neben einer (zumindest abschnittsweise) an das zu fördernde Hohlprofil 221 angepassten Kontur 241 zusätzlich lediglich beispielsweise zwei lokale Ausbuchtungen 242 auf. Die beiden Ausbuchtungen 242 sind buckelförmig ausgestaltet und verengen einen Querschnitt des Förderkanals 240 derart, dass beim Durchlaufen des Querschnitts die lokalen Ausbuchtungen 242 eine Druckkraft auf einen Überlappungsabschnitt 223 des Hohlprofils 221 ausüben und ein lokales Verpressen bewirken. Es versteht sich, dass anstelle der zwei Ausbuchtungen ebenso lediglich eine entsprechende Ausbuchtung oder mehr als zwei Ausbuchtungen vorgesehen werden können.

Zwar sind die in Fig. 2 dargestellten lokalen Ausbuchtungen 242 gegenüber dem Hohlprofil 221 beabstandet dargestellt, dieser dargestellte Abstand dient jedoch lediglich der besseren Darstellbarkeit und Verständlichkeit. Es versteht sich, dass die Ausbuchtungen 242 entweder derart in Kontakt mit dem Hohlprofil 221 angeordnet sind, dass diese kontinuierlich eine Druckkraft auf den Überlappungsabschnitt 223 ausüben. Alternativ besteht jedoch auch die Möglichkeit einer diskontinuierlichen Druckbelastung. Dies bedeutet, dass die Ausbuchtungen 242 des Förderkanals und der Überlappungsabschnitt 223 relativ zueinander bewegbar sind, um die lokalen Ausbuchtungen 242 zumindest zeitweise zum Verpressen des Überlappungsabschnitts in Kontakt mit dem Hohlprofil 221 beziehungsweise dem zu beaufschlagenden Überlappungsabschnitt 223 zu bringen.

Wie bereits beschrieben, kann der dargestellte Förderkanal 240 vorzugsweise in der Imprägniervorrichtung 19 oder der Aushärtevorrichtung 30 vorgesehen werden, so dass der verpresste Zustand des Überlappungsbereichs 223 möglichst gut erhalten bleibt, bis die Matrix ausgehärtet wird, um eine eventuelle ungewollte Rückstellung des verpressten Bereichs zu vermeiden.

Der in Fig. 2 dargestellt Querschnitt des mittels des beschriebenen Verfahrens hergestellten Hohlprofils 221 weist außerdem einen Lagenaufbau 220 auf, der das sich aus einer Anzahl von Faserrovings zusammensetzende Faservorprofil 214 umfasst. Das Faservorprofil 214 ist zur Bildung eines Hohlraums H im Wesentlichen rechteckig abgewinkelt. Selbstverständlich ist die dargestellte Querschnittsform lediglich beispielhaft zu verstehen. Ebenso sind andere, in einer Umfangsrichtung geöffnete oder geschlossene Querschnitte, ob regelmäßige, unregelmäßige, symmetrische oder asymmetrische, insbesondere runde, ovale oder mehreckige Querschnittsformen, oder Mischungen hieraus auf gleiche Weise herstellbar.

Das Faservorprofil 214 umfasst eine äußere Oberfläche, auf der ein Gelege 215 aufgebracht ist, welches einen (bezogen auf die Pultrusionsrichtung) linken und einen rechten seitlichen Randabschnitt 222a,222b umfasst. Die beiden seitlichen Randabschnitte 222a,222b sind überlappend zueinander angeordnet und bilden den bereits genannten Überlappungsabschnitt 223. Um dessen Länge I (quer zur Pultrusionsrichtung P gerichtet) möglichst klein zu halten und dennoch eine zuverlässige Verbindung der beiden Randabschnitte 222a,222b miteinander zu gewährleisten, werden die überlappenden Randabschnitte 222a,222b in diesem Bereich durch ein lokales Verpressen (nicht dargestellt) miteinander verbunden beziehungsweise eine bereits bestehende Verbindung verstärkt.

Lediglich optional ist auf einer der äußeren Oberfläche entgegengesetzt angeordneten, inneren Oberfläche des Faservorprofils 214 ein zweites Gelege 215' angeordnet, dessen beiden seitlichen Randabschnitte 222a',222b' ebenfalls einen Überlappungsbereich 223' bilden und in diesem miteinander verbunden sind. Der Überlappungsbereich 223' ist in der dargestellten Ausführungsform lediglich beispielhaft (bezogen auf den von dem Faservorprofil 214 umschlossenen Hohlraum H) gegenüberliegend zu dem Überlappungsabschnitt 223 des ersten Geleges 215 angeordnet.

Fig. 3 zeigt anstelle eines als Hohlprofil geformten Lagenaufbaus einen Querschnitt eines ebenen Lagenaufbaus 320, der in einem Förderkanal 340 mit entsprechend angepasster Kontur 341 angeordnet ist. Hinsichtlich des Förderkanals 340 und dessen lokalen Ausbuchtungen 342 wird auf die im Wesentlichen vergleichbare Ausgestaltung in Fig. 2 und dessen Beschreibung verwiesen.

Der in Fig. 3 dargestellte Lagenaufbau 320 weist einen im Wesentlichen ebenen Querschnitt auf und umfasst ein als ebene Faserlage ausgeführtes Faservorprofil 314. Im Gegensatz zu dem in Fig. 2 dargestellten Hohlprofil, definiert dieser Querschnitt keinen Hohlraum und kann beispielsweise durch einen Verzicht auf den Drapierschritt in der Drapiervorrichtung 17 erzielt werden, indem in einer Pultrusionsvorrichtung wie in Fig. 1 dargestellt, der Lagenaufbau 20 direkt der Imprägniervorrichtung 19 zugeführt wird.

Auf einer ersten (oberen) Oberfläche sind zueinander benachbart zwei Gelege 315,315' vorgesehen, die mit einem dem jeweils benachbarten Gelege 315,315' zugewandten Randabschnitt 322a,322b überlappend zueinander angeordnet sind und somit einen Überlappungsabschnitt 323 definieren, der durch lokales Verpressen komprimiert und fixiert wird. Auf einer entgegengesetzten zweiten (unteren) Oberfläche des Faservorprofils 314 ist ein weiteres Gelege 315" angeordnet, um einen nahezu symmetrischen Lagenaufbau bereitzustellen und somit das Faservorprofil 314 beziehungsweise das hieraus erzeugte Kunststoffprofil 311 zu verstärken.

## Patentansprüche

1. Pultrusionsverfahren zum Herstellen eines faserverstärkten Kunststoffprofils mit mindestens den folgenden Schritten:
- Anordnen einer Anzahl von Faserrovings (13) zu einem unidirektionalen Faservorprofil (14,214,314) mit einem definierten ersten Querschnitt,
- Aufbringen mindestens eines Geleges (15,215,315) auf das zuvor erzeugte unidirektionale Faservorprofil (14,214,314) zum Erzeugen eines Lagenaufbaus (20,220,320), vorzugsweise eines multidirektionalen Lagenaufbaus, wobei jedes Gelege (15,215,315) seitliche Randabschnitte (222a,222b,322a,322b) umfasst,
- überlappendes Anordnen zweier seitlicher Randabschnitte (222a,222b,322a,322b) zum Erzeugen eines gemeinsamen Überlappungsabschnitts (223,323),
wobei das Verfahren außerdem einen Schritt des lokalen Verpressens des Überlappungsabschnitts (223,323) zum Fixieren der beiden sich überlappenden seitlichen Randabschnitte (222a,222b,322a,322b) in dem Überlappungsabschnitt (223,323) umfasst.

2. Pultrusionsverfahren nach Anspruch 1, wobei das Verfahren außerdem mindestens einen Schritt des Imprägnierens der Faserrovings (13), des Faservorprofils (14,214,314), des mindestens einen Geleges (15,215,315) und/oder des Lagenaufbaus (20,220,320) mit einer Matrix umfasst.

3. Pultrusionsverfahren nach einem der Ansprüche 1 bis 2, wobei der Schritt des lokalen Verpressens während des Schrittes des Imprägnierens des Lagenaufbaus (20,220,320) und/oder nach dem Schritt des Imprägnierens des Lagenaufbaus (20,220,320) erfolgt.

4. Pultrusionsverfahren nach einem der Ansprüche 1 bis 3, wobei der Schritt des lokalen Verpressens vor und/oder während eines Schrittes des Aushärtens des imprägnierten Lagenaufbaus (20,220,320) erfolgt.

5. Pultrusionsverfahren nach einem der Ansprüche 1 bis 4, wobei der definierte erste Querschnitt des unidirektionalen Faservorprofils (14,214,314) einen rechteckigen ersten Querschnitt zur Definition eines als ebene Faserlage ausgebildeten Faservorprofils, oder einen in Umfangsrichtung geschlossenen oder geöffneten ersten Querschnitt zur Definition eines als offenes oder geschlossenes Hohlprofil ausgebildeten Faservorprofils umfasst.

6. Pultrusionsverfahren nach einem der Ansprüche 1 bis 5, wobei das Verfahren ein zueinander benachbartes Aufbringen von zwei Gelegen (15,215,315) auf einer Oberfläche des Faservorprofils (14,214,314) umfasst, wobei die Gelege (15,215,315) mit einem dem jeweils benachbarten Gelege (15,215,315) zugewandten Randabschnitt (222a,222b,322a,322b) überlappend zueinander angeordnet werden, zum Erzeugen des Lagenaufbaus (20,220,320) und des Überlappungsabschnitts (223,323).

7. Pultrusionsverfahren nach einem der Ansprüche 1 bis 6, wobei das Verfahren ein Aufbringen von mindestens zwei Gelegen (15,215,315) umfasst, welche auf einander entgegengesetzten Oberflächen des Faservorprofils (14,214,314) zum Erzeugen des Lagenaufbaus (20,220,320) aufgebracht werden.

8. Pultrusionsverfahren nach einem der Ansprüche 1 bis 7, wobei das Verfahren einen Schritt des Drapierens des Faservorprofils (14,214,314) und/oder des Lagenaufbaus (20,220,320) vor oder während dem Schritt des Erzeugens des Überlappungsabschnitts (223,323) umfasst.

9. Pultrusionsverfahren nach Anspruch 2 bis 8, wobei der Schritt des Imprägnierens mit einer Matrix ein Eintauchen in ein Matrix-Tauchbad oder ein Injizieren einer Matrix umfasst.

10. Pultrusionsvorrichtung zum Herstellen eines faserverstärkten Kunststoffprofils, wobei die Vorrichtung zum Ausführen eines Verfahrens nach einem der Ansprüche 1 bis 9 ausgebildet ist, wobei die Pultrusionsvorrichtung (10) Mittel zum lokalen Verpressen des Überlappungsabschnitts zum Fixieren der beiden sich überlappenden seitlichen Randabschnitte (222a,222b,322a,322b) in dem Überlappungsabschnitt (223,323) umfasst, wobei die Mittel zum lokalen Verpressen mindestens eine lokale Ausbuchtung (242,342) zur Querschnittsverengung in einer Imprägniervorrichtung (19) und/oder in einer Aushärtevorrichtung (30) umfasst.

## Claims

1. Pultrusion method for producing a fibre-reinforced plastic profile, comprising at least the following steps:
- arranging a number of fibre rovings (13) so as to form a unidirectional preliminary fibre profile (14, 214, 314) with a defined first cross section,
- applying at least one scrim (15, 215, 315) to the previously produced unidirectional preliminary fibre profile (14, 214, 314) to produce a layered structure (20, 220, 320), preferably a multidirectional layered structure, each scrim (15, 215, 315) comprising lateral edge portions (222a, 222b, 322a, 322b),
- arranging two lateral edge portions (222a, 222b, 322a, 322b) in an overlapping manner to produce a common overlapping portion (223, 323),
the method additionally comprising a step of locally pressing the overlapping portion (223, 323) to fix the two overlapping lateral edge portions (222a, 222b, 322a, 322b) in the overlapping portion (223, 323) .

2. Pultrusion method according to Claim 1, the method additionally comprising at least one step of impregnating the fibre rovings (13), the preliminary fibre profile (14, 214, 314), the at least one scrim (15, 215, 315) and/or the layered structure (20, 220, 320) with a matrix.

3. Pultrusion method according to either of Claims 1 and 2, the step of local pressing being performed during the step of impregnating the layered structure (20, 220, 320) and/or after the step of impregnating the layered structure (20, 220, 320).

4. Pultrusion method according to one of Claims 1 to 3, the step of local pressing being performed before and/or during a step of curing the impregnated layered structure (20, 220, 320).

5. Pultrusion method according to one of Claims 1 to 4, the defined first cross section of the unidirectional preliminary fibre profile (14, 214, 314) comprising a rectangular first cross section for the definition of a preliminary fibre profile formed as a planar fibre layer, or a first cross section that is closed or open in the circumferential direction for the definition of a preliminary fibre profile formed as an open or closed hollow profile.

6. Pultrusion method according to one of Claims 1 to 5, the method comprising applying two scrims (15, 215, 315) adjacent to one another on a surface of the preliminary fibre profile (14, 214, 314), the scrims (15, 215, 315) being arranged overlapping one another with an edge portion (222a, 222b, 322a, 322b) facing the respectively adjacent scrim (15, 215, 315).

7. Pultrusion method according to one of Claims 1 to 6, the method comprising applying at least two scrims (15, 215, 315), which are applied to surfaces opposite one another of the preliminary fibre profile (14, 214, 314) to produce the layered structure (20, 220, 320).

8. Pultrusion method according to one of Claims 1 to 7, the method comprising a step of draping the preliminary fibre profile (14, 214, 314) and/or the layered structure (20, 220, 320) before or during the step of producing the overlapping portion (223, 323).

9. Pultrusion method according to Claims 2 to 8, the step of impregnating with a matrix comprising immersing in a matrix immersion bath or injecting a matrix.

10. Pultrusion device for producing a fibre-reinforced plastic profile, the device being designed for performing a method according to one of Claims 1 to 9, the pultrusion device (10) comprising means for locally pressing the overlapping portion to fix the two overlapping lateral edge portions (222a, 222b, 322a, 322b) in the overlapping portion (223, 323), the means for locally pressing comprising at least one local protrusion (242, 342) for cross-sectional constriction in an impregnating device (19) and/or in a curing device (30).

## Revendications

1. Procédé de pultrusion pour la fabrication d'un profilé en matière plastique renforcé par des fibres, comprenant au moins les étapes suivantes :
- l'agencement d'un nombre de stratifils de fibres (13) en un profilé préliminaire de fibres unidirectionnel (14, 214, 314) ayant une première section transversale définie,
- l'application d'au moins une nappe (15, 215, 315) sur le profilé préliminaire de fibres unidirectionnel généré auparavant (14, 214, 314) afin de former une structure en couches (20, 220, 320), de préférence une structure en couches multidirectionnelle, chaque nappe (15, 215, 315) comprenant des sections de bord latérales (222a, 222b, 322a, 322b),
- l'agencement en chevauchement de deux sections de bord latérales (222a, 222b, 322a, 322b) afin de former une section de chevauchement commune (223, 323),
le procédé comprenant en outre une étape de compression locale de la section de chevauchement (223, 323) afin de fixer les deux sections de bord latérales qui se chevauchent (222a, 222b, 322a, 322b) dans la section de chevauchement (223, 323).

2. Procédé de pultrusion selon la revendication 1, dans lequel le procédé comprend en outre au moins une étape d'imprégnation des stratifils de fibres (13), du profilé préliminaire de fibres (14, 214, 314), de ladite au moins une nappe (15, 215, 315) et/ou de la structures en couches (20, 220, 320) avec une matrice.

3. Procédé de pultrusion selon l'une quelconque des revendications 1 à 2, dans lequel l'étape de compression locale a lieu pendant l'étape d'imprégnation de la structure en couches (20, 220, 320) et/ou après l'étape d'imprégnation de la structure en couches (20, 220, 320).

4. Procédé de pultrusion selon l'une quelconque des revendications 1 à 3, dans lequel l'étape de compression locale a lieu avant et/ou pendant une étape de durcissement de la structure en couches imprégnée (20, 220, 320).

5. Procédé de pultrusion selon l'une quelconque des revendications 1 à 4, dans lequel la première section transversale définie du profilé préliminaire de fibres unidirectionnel (14, 214, 314) comprend une première section transversale rectangulaire pour la définition d'un profilé préliminaire de fibres configuré sous la forme d'une couche de fibres plane, ou une première section transversale fermée ou ouverte dans la direction circonférentielle pour la définition d'un profilé préliminaire de fibres configuré sous la forme d'un profilé creux ouvert ou fermé.

6. Procédé de pultrusion selon l'une quelconque des revendications 1 à 5, dans lequel le procédé comprend une application de deux nappes (15, 215, 315) voisines l'une de l'autre sur une surface du profilé préliminaire de fibres (14, 214, 314), les nappes (15, 215, 315) étant agencées en chevauchement les unes des autres avec une section de bord (222a, 222b, 322a, 322b) orientée vers la nappe voisine respective (15, 215, 315), afin de former la structure en couches (20, 220, 320) et la section de chevauchement (223, 323).

7. Procédé de pultrusion selon l'une quelconque des revendications 1 à 6, dans lequel le procédé comprend une application d'au moins deux nappes (15, 215, 315), qui sont appliquées sur des surfaces opposées l'une à l'autre du profilé préliminaire de fibres (14, 214, 314) pour former la structure en couches (20, 220, 320) .

8. Procédé de pultrusion selon l'une quelconque des revendications 1 à 7, dans lequel le procédé comprend une étape de drapage du profilé préliminaire de fibres (14, 214, 314) et/ou de la structure en couches (20, 220, 320) avant ou pendant l'étape de formation de la section de chevauchement (223, 323).

9. Procédé de pultrusion selon les revendications 2 à 8, dans lequel l'étape d'imprégnation avec une matrice comprend une immersion dans un bain d'immersion de matrice ou une injection d'une matrice.

10. Dispositif de pultrusion pour la fabrication d'un profilé en matière plastique renforcé par des fibres, le dispositif étant configuré pour mettre en œuvre un procédé selon l'une quelconque des revendications 1 à 9, le dispositif de pultrusion (10) comprenant des moyens pour la compression locale de la section de chevauchement pour fixer les deux sections de bord latérales qui se chevauchent (222a, 222b, 322a, 322b) dans la section de chevauchement (223, 323), les moyens pour la compression locale comprenant au moins un renflement local (242, 342) pour le rétrécissement de la section transversale dans un dispositif d'imprégnation (19) et/ou dans un dispositif de durcissement (30).
